# EUROPÄISCHE PATENTANMELDUNG

(11) **EP 1 201 484 A2**
(43) Veröffentlichungstag der Anmeldung: **02.05.2002**
(21) Anmeldenummer: 01125134.5
(22) Anmeldetag: 23.10.2001
(51) Int. Cl.: B60L 7/00

(54) **Feststellbremseinrichtung für Fahrzeuge und Antiebssystem mit einer Feststellbremseinrichtung**

(30) Priorität: 26.10.2000 DE 10053265
(71) Anmelder: Voith Turbo GmbH & Co. KG, 89522 Heidenheim (DE)
(72) Erfinder: Volgers, Gerrit, 5503 Veldhoven (NL)
(74) Vertreter: Dr. Weitzel & Partner

(57) **Zusammenfassung**

Die Erfindung betrifft eine Feststellbremseinrichtung (1; 1.2a; 1.2b; 1.3a; 1.3b; 1.3c) für Fahrzeuge (30.2a; 30.2b; 30.3a; 30.3b; 30.3c). Diese wird erfindungsgemäß von einer permanent magneterregten Synchronmaschine mit transversaler Flußführung, insbesondere Transversalflußmaschine (2; 2.2a; 2.2b; 2.3a; 2.3b; 2.3c) gebildet..

## Beschreibung

Die Erfindung betrifft eine Feststellbemseinrichtung; ferner ein Antriebssystem mit einer Feststellbremseinrichtung mit den Merkmalen aus dem Oberbegriff des Anspruchs 5 sowie die Verwendung eines Antriebssystems und ein Verfahren zur Erzeugung einer Haltekraft zur Vermeidung von unbeabsichtigtem Losrollen eines Fahrzeuges im Stillstand in einem Antriebssystems.

Feststellbremseinrichtungen in Fahrzeugen dienen dazu, während längerer Halte, z. B. vor Ampeln oder während Parkvorgängen das Fahrzeug am Wegrollen zu hindern. Aus sicherheitstechnischen Gründen müssen diese jedoch derart beschaffen sein, daß sie ohne Energiezufuhr im Bremszustand verharren. Für den Einsatz in Nutzkraftwagen gelangen in der Regel Federspeicherbremsen zur Anwendung, welche unter Zufuhr von Druckmittel, insbesondere Druckluft gelöst werden. Derartige Bremsen wirken dabei direkt oder über eine Getriebebaueinheit auf die Räder des Fahrzeuges. Dabei ist es unerheblich, ob es sich beim Antrieb des Fahrzeuges um einen mechanischen Antrieb handelt oder um einen dieselelektrischen Antrieb. Der Nachteil einer derartigen Ausführung besteht darin, daß zusätzlich eine Bremseinrichtung zur Realisierung der Haltefunktion erforderlich ist und diese im Fahrzeug angeeignete Stelle im Antriebsstrahl, vorzugsweise vor dem Getriebe angeordnet werden muß. Des weiteren ist an derartige Systeme ein hoher Wartungsaufwand gebunden, der zur sicheren Betätigung und dem Loslassen ein entsprechender Druck aufgebaut und an der Federspeicherbremseinheit wirksam werden muß. Zu diesem Zweck ist die Dichtheit der Leitungssysteme jederzeit zu gewährleisten.

Der Erfindung liegt die Aufgabe zugrunde, eine Feststellbremseinrichtung der eingangs genannten Art für den Einsatz in Fahrzeugen derart weiter zu entwickeln, daß die genannten Nachteile vermieden werden. Im Einzelnen ist auf eine Ausführung im Antriebsstrang abzustellen, welche eine minimale Anzahl zusätzlicher Bauelemente erfordert und des weiteren leicht ansteuerbar ist.

Die erfindungsgemäße Lösung ist durch die Merkmale der Ansprüche 1, 5, 15, 16 und 17 charakterisiert. Vorteilhafte Ausgestaltungen sind jeweils in den Unteransprüchen wiedergegeben.

Erfindungsgemäß wird eine Feststellbremseinrichtung für Fahrzeuge von einer permanent magneterregten Synchronmaschine mit transversaler Flußführung, insbesondere einer Transversalflußmaschine gebildet. Dabei wird ausgenutzt, daß bei einer permanent magneterregten Sysnchronmaschine mit transversaler Flußführung bei Betrachtung nur einer einzelnen Phase ohne angelegtes Statorfeld und ohne Einwirkung auf die Maschinenwelle der Rotor in einer Vorzugsstellung verharrt. Diese Vorzugsstellung ist dadurch charakterisiert, daß die Magnetkreise der betrachteten Phase in dieser Stellung ein Minimum an magnetischer Energie speichern. Ein Verdrehen des Rotors über die Welle würde zu einer Erhöhung der gespeicherten Energie in den Magnetkreisen führen. Es entsteht somit in der Phase ein sogenanntes Reluktanzmoment, was der Verdrehung des Rotors von außen entgegenwirkt.

Die permanent magneterregte Synchronmaschine mit transversaler Flußführung, insbesondere Transversalflußmaschine ist mindestens einphasig, beim Einsatz in Fahrzeugen in der Regel zweiphasig, ausgeführt. In einer besonders vorteilhaften Ausgestaltung wird zur Erzeugung des Haltemomentes bei Funktion als Feststellbremseinrichtung in einem Fahrzeug nur eine Phase kurzgeschlossen. Dazu sind Mittel zur Erzeugung eines Kurzschlußes mindestens einer Ankerwicklung einer Phase vorgesehen. Da die Höhe des Reluktanzmomentes abhängig vom Grad der Verdrehung des Rotors aus der Vorzugsstellung und von der Größe der permanent magnetischen Erregung ist, stellen die Mittel zur Erzeugung eines Kurzschlußes mindestens einer Ankerwicklung eine Möglichkeit zur Steigerung der Höhe des Widerstandsmomentes gegenüber einer Verdrehung aus der Vorzugsstellung dar. Dabei bewirkt der dynamische Vorgang des Verdrehens über Wechselwirkungen zwischen dem durch die Permanentmagnete erzeugten Erregerfeld und der Kurzschlußwicklung den Aufbau eines Kurzschlußdrehmonentes. Dieses wirkt wie das Reluktanzmoment der Verdrehung entgegen. Erfindungsgemäß wird somit das hohe Reluktanzmoment einer Phase im Kurzschluß zum Festsetzen genutzt. Dies ist allein ausreichend. Die Feststellbremseinrichtung ist frei von mechanischen Mitteln zur Festsetzung. Die Erfinder haben somit die vorteilhafte Wirkung des einphasigen Kurzschlußes und dessen Anwendung bei Verzicht auf weitere mechanische Mittel zur Stillsetzung eines Fahrzeuges erkannt

Die erfindungsgemäße Lösung ist mit Synchronmaschinen mit transversaler Flußführung und unterschiedlicher Anzahl an Phasen einsetzbar. Vorzugsweise finden jedoch aufgrund eines selbstätigen Anlaufens Synchronmaschinen mit transversaler Flußführung mit mindestens zwei Phasen in Fahrzeugen Verwendung. Bezüglich der Ausgestaltung dieser Maschine im einzelnen, insbesondere dem konstruktiven Aufbau bestehen keinerlei Beschränkungen. Bei einer 2-phasigen Ausführung umfaßt beispielsweise die Synchronmaschine mit transversaler Flußführung eine Trägerscheibe und beidseitig der Trägerscheibe angeordnete Polstrukturen. Die Statoreinheit umfaßt mindestens eine jeder Polstruktur zugeordnete Ankerwicklung. Die Mittel zur Erzeugung eines Kurzschlusses sind mindestens einer Ankerwicklung einer Polstruktur zugeordnet und umfassen beispielsweise eine Schalteinrichtung.

Die erfindungsgemäße Lösung ist in Antriebssträngen in folgenden Versionen einsetzbar:
a) Vorsehen einer separaten Feststell-Bremseinrichtung
b) Ausnutzung einer im Antriebsstrang ohnehin als Motor oder Generator vorhandenen Synchronmaschine mit transversaler Flußführung als Feststelleinrichtung

Im letztgenannten Fall umfaßt das Antriebssystem mindestens eine, mit einer Antriebsmaschine zum wenigstens mittelbaren Antrieb eines Rades in Form einer permanent magneterregten Synchronmaschine mit transversaler Flußführung, insbesondere Transversalflußmaschine gekoppelte Antriebsmaschine. Die Funktion der Feststellbremseinrichtung durch entsprechende Ansteuerung von der permanent magneterregten Synchronmaschine mit transversaler Flußführung, insbesondere Transversalflußmaschine übernommen. Dabei kann diese Funktion bei Ausführungen mit jedem anzutreibenden Rad zugeordneter permanent magneterregte Synchronmaschine mit transversaler Flußführung von jeder oder aber nur einer dieser Maschinen übernommen werden. Besonders vorteilhaft ist die Zuordnung der Funktion der Feststellbremseinrichtung zu einer Antriebsmaschine in Form einer Synchronmaschine mit transversaler Flußführung, wenn zwischen dieser und dem oder den anzutreibenden Rädern eine Drehzahl-und/oder /Drehmomentwandlungseinrichtung zwischengeschaltet ist, da in diesem Fall das Übersetzungsverhältnis der Getriebestufen gewährleistet, daß das Widerstandsmoment an der Rotorwelle der Transversalflußmaschine in ein genügend hohes Bremsmoment an den Rädern gewandelt wird.

Die erfindungsgemäße Lösung wird nachfolgend anhand von Figuren erläutert. Darin ist im einzelnen folgendes dargestellt:
- Figur 1: verdeutlicht in schematisch vereinfachter Darstellung in einem Axialschnitt eine Feststellbremseinrichtung in Form einer Transversalflußmaschine;
- Figuren 2a und 2b: verdeutlichen mögliche Anwendungen in Antriebssystemen mit Zentralmotor;
- Figuren 3a bis 3c: verdeutlichen mögliche Anwendungen in Einzelradantrieben;
- Figuren 4a bis 4c: verdeutlichen die den Antriebssystemen gemäß der Figuren 2 und 3 zuordenbaren Energierzeuger.

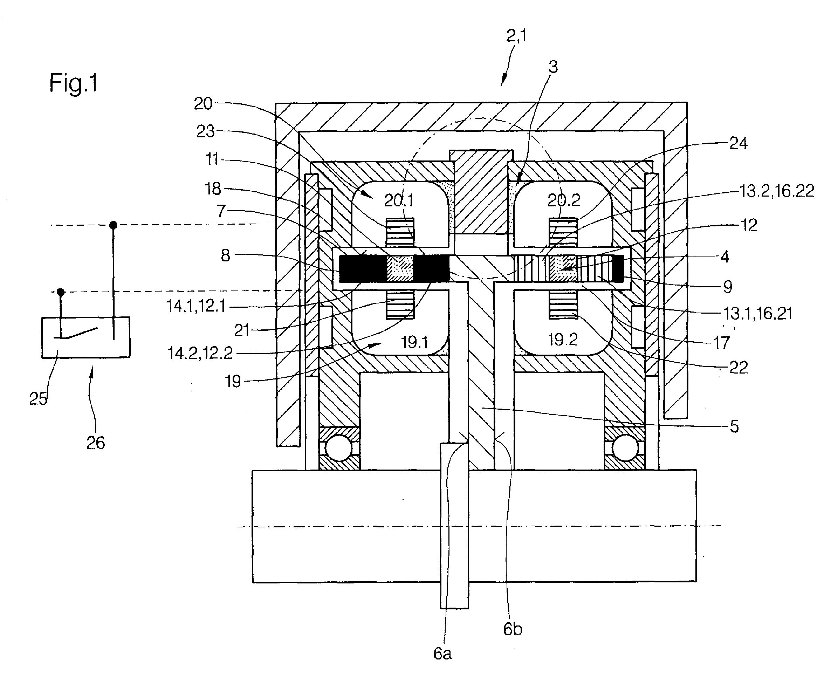

Figur 1 verdeutlicht in schematisch vereinfachter Darstellung eine Feststellbremseinrichtung 1 für den Einsatz in Fahrzeugen, insbesondere Nutzkraftwagen oder Schienenfahrzeugen. Diese ist als permanent magneterregte Synchronmaschine mit transversaler Flußführung, insbesondere Transversalflußmaschine ausgeführt, wobei diese beim Einsatz zum Antrieb in Fahrzeugen in vorteilhafter Weise zweiphasig ausgeführt ist. Dazu umfaßt die permanent magneterregte Synchronmaschine mit transversaler Flußführung 2 eine Statorbaueinheit 3 und einen Läufer in Form eines Rotors 4. Der Rotor 4 umfaßt eine zentrale Trägerscheibe 5, an deren Stirnseiten 6a und 6b im Bereich des Außenumfanges 7 jeweils eine Polstruktur 8 und 9 angeordnet ist, die sich in axialer Richtung von der zentralen Trägerscheibe 5 wegerstreckt. Jede Polstruktur umfaßt dabei zwei über eine Zwischenlage aus magnetisch und elektrisch nicht leitfähigem Material 10 bzw. 11 getrennten Reihen 12.1 und 12.2 bzw. 13.1 und 13.2 aus in Umfangsrichtung wechselweise magnetisierten Permanent-Magnetanordnungen 14.11 bzw. 14.21 für die Reihen 12.1 und 12.2 und hier nicht dargestellt 15.11 und 15.22 für die Reihen 13.1 und 13.2 und dazwischen angeordneten Weicheisenelementen 16.11 und 16.12 für die Reihen 12.1 und 12.2 sowie 16.21 und 16.22 für die Reihen 13.1 und 13.2. Die Statorbaueinheit 3 ist dem Rotor 4 unter Bildung mindestens eines radial inneren oder radial äußeren Zwischenraumes, im dargestellten Ausführungsbeispiel eines radial inneren Zwischenraumes 17 und eines radial äußeren Zwischenraumes 18, welche auch als Luftspalte bezeichnet werden, zugeordnet. Die Statorbaueinheit umfaßt dabei im dargestellten Beispiel einen Innenstator 19 und einen Außenstator 20, wobei der Innenstator 19 zwei Statorelemente ein erstes Statorelement 19.1, welche der ersten Polstruktur 8 zugeordnet ist und ein zweites Statorelement 19.2, welches der zweiten Polstruktur 9 zugeordnet ist, umfaßt. In Analogie gilt diese Aussage auch für den Außenstator 20. Dieser umfaßt die beiden Statorelemente 20.1 und 20.2. Denkbar sind auch Ausführungen mit jeweils nur einem Innenstator 19 oder einem Außenstator 20. Des weiteren umfaßt die Statorbaueinheit 3 mindestens eine, jeder Polstruktur 8 bzw. 9 zugeordnete Ankerwicklung 21 bzw. 22. Vorzugsweise sind jeweils zwei jeder Polstruktur zugeordnete und parallel geschaltete Ankerwicklungen vorgesehen, d.h. zusätzlich die Ankerwicklung 23 zur Polstruktur 8 und die Ankerwicklung 24 zur Polstruktur 9, wobei diese jeweils dem Innenstator 19 bzw. dem Außenstator 20 zugeordnet sind. Diese Ankerwicklungen 21 und 23 für die Polstruktur 8 und 22 und 24 für die Polstruktur 9 werden auch als Statorwicklungen bezeichnet. Die Statorwicklungen einer Phase sind durch zwei Stränge gekennzeichnet. Zur Realisierung der erfindungsgemäßen Funktion der Feststellbremseinrichtung 1 durch die permanent magneterregte Synchronmaschine mit transversaler Flußführung 2 ist es erforderlich, mindestens eine der beiden Phasen, welche durch das Vorhandensein der Polstrukturen 8 und 9 charakterisiert sind, kurzzuschließen. Dies erfolgt durch Kurzschluß der Statorwicklungen, d.h. der Ankerwicklungen 21 und 23 bzw. 22 und 24 jeweils einer Phase, d.h. der Polstrukturen 8 oder 9. Dies erfolgt im dargestellten Beispiel für die Ankerwicklungen 21 und 23 der Polstruktur 8 über Mittel zur Realisierung eines Kurzschlusses 25.

Erfindungsgemäß wird dabei mindestens eine Statorwicklung einer Polstruktur 8 oder 9 kurzgeschlossen. Die Mittel 25 bewirken dabei eine elektrisch leitende Verbindung zwischen den beiden Anschlüssen einer Statorwicklung, hier beispielsweise der als Statorwicklung fungierenden Ankerwicklungen 21 und 23 der Polstruktur 8. Vorzugsweise wird dazu ein sogenannter Fail-Safe-Schalter 26 verwendet. Die erfindungsgemäße Lösung baut dabei auf der Erkenntnis auf, daß bei einer einzelnen Phase bei einer permanent magneterregten Synchronmaschine 2 ohne ein an der Statorbaueinheit 3 angelegtes Statorfeld und ohne Einwirkung auf die mit dem Rotor 4 gekoppelte Welle der Rotor 4 in seiner Vorzugsstellung verharrt. Dabei ist diese Vorzugsstellung dadurch charakterisiert, daß die Magnetkreise der betrachteten Phase, d.h. an der entsprechenden Polstruktur, hier der Polstruktur 8 in dieser Stellung ein Minimum an magnetischer Energie speichern. Als Magnetkreise fungieren dabei die sich überlagernden Magnetfelder der Permanent-Magnetanordnungen 14.11, 14.21 der Reihen 12.1 und 12.2 der Polstruktur 8. Ein Verdrehen des Rotors 4, d.h. des Versuches der Betreibung im generatorischen Betrieb würde die gespeicherte Energie in den Magnetkreisen erhöhen. Es entsteht in der durch die Polstruktur 8 bestimmten Phase ein sogenanntes Reluktanzmoment, was der Verdrehung des Rotors 4 von außen entgegenwirkt. Die Höhe des Reluktanzmomentes ist dabei abhängig vom Grad der Verdrehung aus der Vorzugsstellung und von der Größe der Erregung der Permanent-Magnetanordnungen 14.11 und 14.22. Das Widerstandsmoment gegen ein Verdrehen aus der Vorzugsstellung kann in seiner Höhe dabei noch erheblich gesteigert werden, wenn die Ankerwicklungen 21 und 23 kurzgeschlossen werden. Der dynamische Vorgang des Verdrehens bewirkt über Wechselwirkungen zwischen dem Erregerfeld und der Kurzschlußwicklung den Aufbau eines sogenannten Kurzschlußmomentes M_{kurz}. Das Kurzschlußmoment M_{kurz} wirkt dabei wie das Reduktanzmoment der Verdrehung entgegen.

Die Funktion einer Feststellbremseinrichtung 1 über eine permanent magneterregte Synchronmaschine mit transversaler Flußführung 2 kann erfindungsgemäß auch mit einer einphasigen Maschine realisiert werden. In diesem Fall ist diese Maschine jedoch nicht aktiv ohne zusätzliche Hilfsmittel zur Realisierung des Anlaufes im Antriebsstrang einsetzbar. Daher werden in Fahrzeugantrieben permanent magneterregte Synchronmaschinen mit transversaler Flußführung 2 gemäß Figur 1, welche zwei um 90° zueinander versetzte Phasen, d.h. Polstrukturen 8 und 9umfassen, eingesetzt. Die Reluktanzkräfte beider Phasen überlagern sich und schwächen sich aufgrund des Phasenversatzes ab. In diesem Fall wird als Feststellbremswirkung die durch den Kurzschluß in der Ankerwicklung einer Polstruktur einstellende Wirkung des Kurzschlußmomentes M_{kurz} genutzt. Die Erzeugung der Feststellbremswirkung durch den Kurzschluß der Ankerwicklung einer Phase einer permanent magneterregten Synchronmaschine mit transversaler Flußführung 2 bietet den Vorteil, daß in Antriebssystemen eingesetzte permanent magneterregte Synchronmaschinen mit transversaler Flußführung zur Leistungsübertragung gleichzeitig während des Abstellvorganges des Fahrzeuges die Funktion einer Feststellbremseinrichtung übernehmen können ohne zusätzliche weitere Modifikationen, außer den Mitteln zur Realsierung eines Kurzschlusses 25. Daher verdeutlicht Figur 1 eine bevorzugte Ausführung einer permanent magneterregten Synchronmaschine mit transversaler Flußführung 2 und Mittel zur Realisierung eines Kurzschlusses 25 an einer Polstruktur 8.

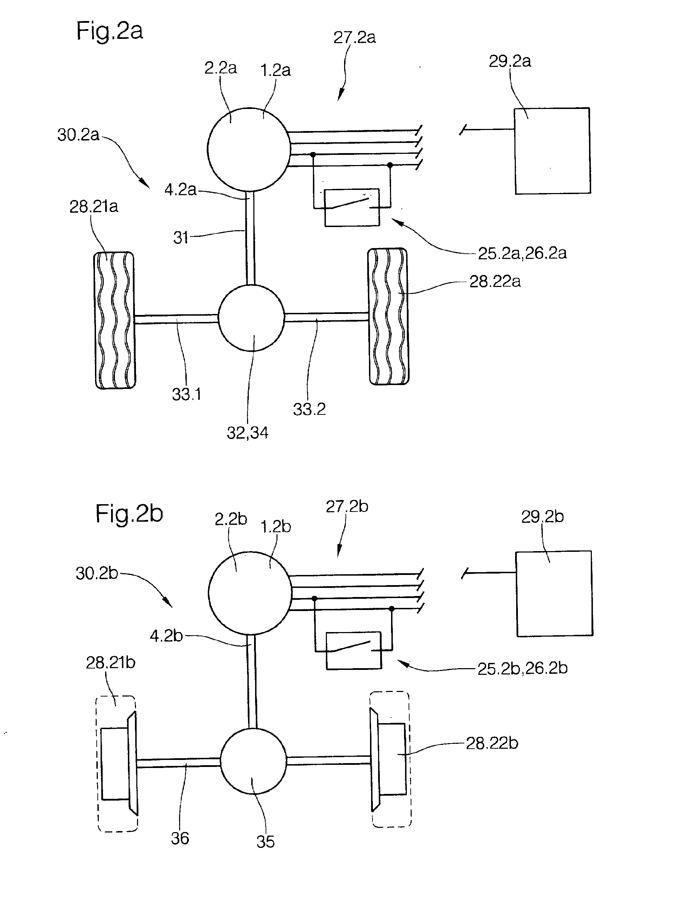

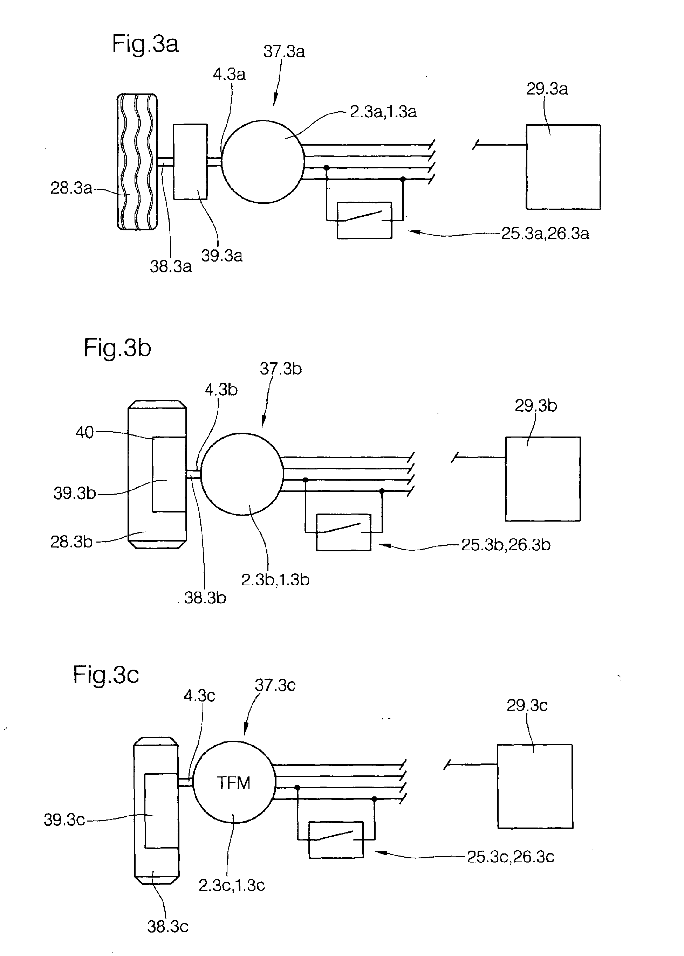

Die Figuren 2a und 2b verdeutlichen den Aufbau von Antriebssystemen 27.2a und 27.2b mit einer permanent magneterregten Synchronmaschine mit transversaler Flußführung 2.2a und 2.2b, welche wenigstens mittelbar mit mindestens einem anzutreibenden Rad 28.21a 28.22a bzw. 28.21b und 28.22b gekoppelt ist. Bei beiden Ausführungen umfaßt das Antriebssystem 27.2a und 27.2b einen Energieerzeuger 29.2a bzw. 29.2b. Dieser kann verschiedenartig ausgeführt sein, beispielsweise wie in den Figuren 3a bis 3d beschrieben. Die permanent magneterregten Synchronmaschinen mit transversaler Flußführung 2.2a gemäß Figur 2a und 2.2b gemäß Figur 2b sind als Zentralmotoren ausgeführt. Dies bedeutet, daß diese an beliebiger Stelle im Fahrzeug 30.2a bzw. 30.2b angeordnet sein können und der Rotor 4.2a bzw. 4.2b über weitere Leistungsübertragung- und/oder Drehzahl-/Drehmomentwandlungseinrichtungen mit den anzutreibenden Rädern 28.21a, 28.22a bzw. 28.21b und 28.22b gekoppelt ist. Gemäß Figur 2a erfolgt die Kopplung beispielsweise über einen Wellenstrang 31 auf ein Verteilergetriebe 32, dessen Ausgänge 33.1 und 33.2 mit den anzutreibenden Rädern 28.21a und 28.22a verbunden sind. Das Verteilergetriebe ist dabei im einfachsten Fall als Differential 34 ausgeführt. Vorzugsweise erfolgt die Anordnung des Verteilergetriebes 32 mittig zwischen den anzutreibenden Rädern 28.21a und 28.22b. Des weiteren ersichtlich sind die Mittel 25.2a zur Realisierung eines Kurzschlusses, welche in den Poren eines Fail-Safe-schalters im einfachsten Fall 26.2a ausgeführt sind. Diese dienen zum Kurzschluß einer Ankerwicklung der permanent magneterregten Synchronmaschine mit transversaler Flußführung.

Figur 2b verdeutlicht eine bezüglich des Grundaufbaus fast analoge Ausführung zur Figur 2a, wobei die Kopplung zwischen dem Rotor 4.2b der permanent magneterregten Synchronmaschine mit transversaler Flußführung 2.2b über ein Radsatzgetriebe 35 erfolgt. Dies bewirkt den Antrieb einer Radachse 36, mit der die einzelnen Räder 28.21b bzw. 28.22b verbunden sind. Zur Realisierung der Feststellbremseinrichtung 1.2b durch die permanent magneterregte Synchronmaschine mit transversaler Flußführung 2.2b sind auch hier Mittel zur Erzeugung eines Kurzschlusses 25.2b in Form eines Fail-Safe-Schalters 26.2b für die Ankerwicklung einer Polstruktur vorgesehen. In beiden Ausführungen fungiert die permanent magneterregte Synchronmaschine mit transversaler Flußführung im Traktionsbetrieb als leistungsübertragende Einheit, d.h. Antriebsmaschine für die anzutreibenden Räder. Des weiteren besteht die Möglichkeit, diese auch im generatorischen Betrieb zum Zwecke der Energiespeicherung zu betreiben. Zusätzlich wird bei Stillstand des Fahrzeuges durch die entsprechende Schaltung der Mittel zur Erzeugung eines Kurzschlusses 25 ein Kurzschlußmoment erzeugt, welches einem Antrieb des Rotors 4.2a und 4.2b entgegenwirkt. Beide in den Figuren 2a und 2b dargestellten Ausführungen stellen Beispiele dar. Es besteht dabei auch die Möglichkeit bei Ausführung der permanent magneterregten Synchronmaschine mit transversaler Flußführung 2.2a bzw. 2.2b als Zentralmotor zwischen diesen und den entsprechenden Verteilereinrichtungen auf die Räder weitere Drehzahl-/Drehmomentwandlungseinrichtungen zwischenzuschalten oder den Durchtrieb zu den anzutreibenden Rädern nicht mittig zu gestalten, sondern außermittig. Auch bestehen bezüglich der Ausbildung der einzelnen Verteilergetriebe 32 bzw. des Radsatzgetriebes 35 eine Vielzahl von Möglichkeiten.

Die Figuren 3a und 3b verdeutlichen in schematisch vereinfachter Ausführung Beispiele für die Ausbildung von permanent magneterregten Synchronmaschinen mit transversaler Flußführung 2.2a und 2.2b in Einzelradantrieben 37.3a und 37.3b als Feststellbremseinrichtung 1.3a und 1.3b. Bei diesen Ausführungen ist die permanent magneterregte Synchronmaschine mit transversaler Flußführung 2.3a bzw. 2.3b einem anzutreibenden Rad 28.3a bzw. 28.3b unmittelbar zugeordnet, vorzugsweise in räumlicher Nähe zu diesem angeordnet. Gemäß den Figuren 3a und 3b ist der Rotor 4.3b bzw. 4.3a koaxial zur Radantriebswelle 38.3a bzw. 38.3b angeordnet. Zwischen der permanent magneterregten Synchronmaschine mit transversaler Flußführung 2.3a und 2.3b und dem anzutreibenden Rad sind vorzugsweise Drehzahl-/Drehmomentwandlungseinrichtungen 39.3a bzw. 39.3b, vorzugsweise in sogenannten Übersetzungsgetrieben zur Übersetzung ins Langsame angeordnet. Gemäß Figur 3a ist die Drehzahl-/Drehmomentenwandlungseinrichtung 39.3a zwischen dem anzutreibenden Rad 28.3a und der permanent magneterregten Synchronmaschine 2.3a angeordnet, während gemäß Figur 3b die Drehzahl-/Drehmomentenwandlungseinrichtung 38.3b im Rad integriert ist und ein Ausgang 40 mit der Radnabe drehfest verbunden ist.

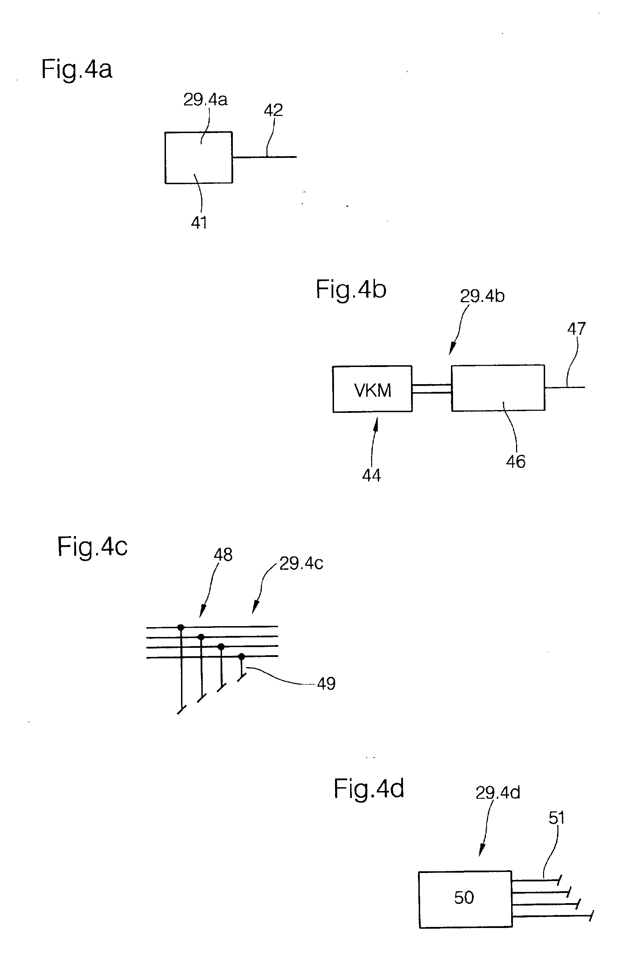

Eine weitere Möglichkeit ist in der Figur 3c wiedergegeben. Diese verdeutlicht eine Ausführung gemäß Figur 3b, jedoch mit exzentrischer Anordnung des Rotors zur Radantriebswelle 38.3c. Bei jeder dieser Ausführungen gemäß Figur 3a bis 3c ist die bei Stillstand des Fahrzeuges als Feststellbremseinrichtung 1.3a, 1.3b bzw. 1.3c fungierende permanent magneterregte Synchronmaschine mit transversaler Flußführung 2.3a, 2.3b bzw. 2.3c mit einer entsprechender Energieerzeugungseinrichtung 29.3a, 29.3b bzw. 29.3c verbunden. Bezüglich der Ausführung der Energieerzeugungseinrichtungen 29.3a bis 29.3c wird auf die Figuren 4a bis 4d verwiesen. Bei allen Ausführungen sind der permanent magneterregten Synchronmaschine mit transversaler Flußführung 2.3a bis 2.3c Mittel 25.3a bis 25.3c in Form eines sogenannten Fail-Safe-Schalters 26.3a bis 26.3c zur Erzeugung eines Kurzschlusses in der Statorwicklung vorgesehen.

Bei den gemäß den Figuren 2 und 3 dargestellten Ausführungsbeispielen von Antriebssystemen, den Antriebssystemen 27.2a, 27.2b für Zentralantriebe und 37.3a bis 37.3c für Einzelradantriebe sind der permanent magneterregten Synchronmaschine mit transversaler Flußführung 2.2a bis 3.3c Mittel zugeordnet, welche bei Stillstand des Fahrzeuges eine Aktivierung als Feststellbremseinrichtung 1.2a bis 1.3c ermöglichen, beispielsweise in Form eines entsprechenden vom Fahrer zu betätigenden Schalters, welcher auf den Fail-Safe-Schalter 26.2a bis 26.3c einwirkt.

Die Figuren 4a bis 4d verdeutlichen in schematisch stark vereinfachter Darstellung eine Möglichkeit der Ausführung der Energieerzeugung 29.2a, 29.2b, 29.3a, 29.3b und 29.3c. Gemäß Figur 4a ist die Energieerzeugungseinrichtung 29 in Form einer Brennstoffzelle 41 ausgeführt, welche elektrisch mit der permanent magneterregten Synchronmaschine mit transversaler Flußführung über eine elektrische Kopplung 42 koppelbar ist.

Figur 4b verdeutlicht eine Ausführung einer Energieerzeugungseinrichtung 29 in Form eines dieselelektrischen Antriebes 43, umfassend eine Verbrennungskraftmaschine 44, die über eine mechanische Kopplung 45 mit einem Generator 46 verbunden ist, der wiederum über eine elektrische Kopplung 47 mit der permanent magneterregten Synchronmaschine mit transversaler Flußführung zum Antrieb mindestens eines Rades verbindbar ist.

Figur 4c verdeutlicht einen externen Energieerzeuger 29.4c in Form eines Oberleitsystemes 48, welches über eine elektrische Kopplung 49 mit der permanent magneterregten Synchronmaschine mit transversaler Flußführung verbindbar ist.

Figur 4d verdeutlicht einen Energieerzeuger in Form einer Energiespeichereinrichtung, beispielsweise Batterie 50, welche über die elektrische Kopplung 51 mit der permanent magneterregten Synchronmaschine mit transversaler Flußführung verbunden ist. Diese Energieerzeugungeinrichtung 29.4d ist dabei jedoch in der Regel nur für den zeitweisen Einsatz geeignet.

Die erfindungsgemäße Lösung ist nicht auf die Anwendungsbeispiele in den Figuren 2 bis 4 beschränkt. Diese stellen lediglich grundsätzliche Möglichkeiten dar, welche durch das Vorsehen von Zusatzkomponenten mit Zusatzfunktionen ausgestattet werden können. Diese sind jedoch abhängig vom konkreten Einsatzfall und liegen im Ermessen des zuständigen Fachmannes.

Die erfindungsgemäße Lösung ist nicht auf den Einsatz in einem bestimmten Typ von Fahrzeug beschränkt. Diese kann sowohl in Schienenfahrzeugen als auch Landfahrzeugen zur Anwendung gelangen.

### Bezugszeichenliste

- 1, 1.2a, 1.2b, 1.3a, 1.3b, 1.3c: Feststellbremseinrichtung
- 2, 2.2a, 2.2b, 2.3a, 2.3b, 2.3c: permanent magneterregte Synchronmaschine mit transversaler Flußführung, insbesondere Transversalflußmaschine
- 3: Statorbaueinheit
- 4, 4.2a, 4.2b, 4.3a, 4.3b, 4.3c: Rotor
- 5: Trägerscheibe
- 6.a, 6.b: Stirnseite der Trägerscheibe
- 7: Außenumfang
- 8: Polstruktur
- 9: Polstruktur
- 10: Zwischenlage
- 11: Zwischenlage
- 12.1, 12.2: Reihen aus wechselweise in Umfangsrichtung magnetisierten Permanent-Magnetanordnungen und Weicheisenelementen
- 13.1, 13.2: Reihen aus wechselweise in Umfangsrichtung magnetisierten Permanent-Magnetanordnungen und Weicheiseneiementen
- 14.11, 1421: Permanent-Magnetanordnungen der Polstruktur 8
- 15.11, 15.22: Permanent-Magnetanordnungen der Polstruktur 9
- 16.11, 16.12: Weicheisenelemente
- 16.21, 16.22: Weicheisenelemente
- 17: radial innerer Zwischenraum
- 18: radial äußerer Zwischenraum
- 19: Innenstator
- 20: Außenstator
- 19.1, 19.2: Statorelemente des Innenstators
- 20.1, 20.2: Statorelemente des Außenstators
- 21: Ankerwicklung
- 22: Ankerwicklung
- 23: Ankerwicklung
- 24: Ankerwicklung
- 25, 25.2a, 25.2b 26, 26.2a, 26.2b: Mittel zur Realisierung eines Kurzschlusses
- 26.3a, 26.3b, 26.3c: Fail-Safe-Schalter
- 27.2a, 27.2b: Antriebssystem
- 28.21a, 28.22a, 28.21b, 28.22b, 28.3a, 28.3b, 28.3c: Rad
- 29.2a, 29.2b, 29.3a, 29.3b, 29.3c, 29.4a, 29.4b, 29.4c 29.4d: Energieerzeuger
- 30.2a, 30.2b, 30.3a, 30.3b, 30.3c: Fahrzeug
- 31: Wellenstrang
- 32: Verteilergetriebe
- 33,1, 33.2: Ausgang des Verteilergetriebes 32
- 34: Differential
- 35: Radsatzgetriebe
- 36: Radachse
- 37.3a, 37.3b, 37.3c: Einzelradantrieb
- 38.3a, 38.3b, 38.3c: Radantriebswelle
- 39.3a, 39.3b, 39.3c: Drehzahl-/Drehmomentwandler
- 40: Ausgang
- 41: Brennstoffzelle
- 42: elektrische Kopplung
- 43: dieselelektrischer Antrieb
- 44: Verbrennungskraftmaschine
- 45: mechanische Kopplung
- 46: Generator
- 47: elektrische Kopplung
- 48: Oberleitsystem
- 49: elektrische Kopplung
- 50: Energiespeichereinrichtung
- 51: elektrische Kopplung

## Patentansprüche

1. Feststellbremseinrichtung (1; 1.2a; 1.2b; 1.3a; 1.3b; 1.3c) für Fahrzeuge (30.2a; 30.2b; 30.3a; 30.3b; 30.3c), **dadurch gekennzeichnet, daß** diese als permanent magneterregte Synchronmaschine mit transversaler Flußführung, insbesondere Transversalflußmaschine (2; 2.2a; 2.2b; 2.3a; 2.3b; 2.3c) ausgeführt ist.

2. Feststellbremseinrichtung (1; 1.2a; 1.2b; 1.3a; 1.3b; 1.3c) nach Anspruch 1, **dadurch gekennzeichnet, daß** die permanent magneterregte Synchronmaschine mit transversaler Flußführung (2; 2.2a; 2.2b; 2.3a; 2.3b; 2.3c) als zweiphasige Synchronmaschine mit transversaler Flußführung ausgeführt ist.

3. Feststellbremseinrichtung nach einem der Ansprüche 1 - 2, **dadurch gekennzeichnet, daß** Mittel zur Erzeugung eines Kurzschlußes nur einer Phase der Syndronmaschine zugeordnet sind.

4. Feststellbremseinrichtung nach einem der Ansprüche 1 - 3, **dadurch gekennzeichnet, daß** diese frei von mechanischen Mitteln zur Stillsetzung sind.

5. Feststellbremseinrichtung (1; 1.2a; 1.2b; 1.3a; 1.3b; 1.3c) nach einem der Ansprüche 2 - 4, **gekennzeichnet durch** die folgenden Merkmale:
5.1 die Synchronmaschine mit transversaler Flußführung (2; 2.2a; 2.2b; 2.3a; 2.3b; 2.3c) umfaßt eine Trägerscheibe (5);
5.2 mit beidseitig der Trägerscheibe (5) angeordneten Polstrukturen (8, 9);
5.3 mit einer Statoreinheit (3), umfassend mindestens eine jeder Polstruktur (8, 9) zugeordnete Ankerwicklung (21, 22, 23, 24);
5.4 mit Mitteln (25; 25.2a; 25.2b) zur Erzeugung eines Kurzschlusses mindestens einer Ankerwicklung (21, 22, 23, 24) einer Polstruktur (8, 9).

6. Feststellbremseinrichtung (1; 1.2a; 1.2b; 1.3a; 1.3b; 1.3c) nach Anspruch 5, **dadurch gekennzeichnet, daß** die Mittel zur Erzeugung eines Kurzschlusses (25; 25.2a; 25.2b) mindestens einen Fail-Safe-Schalter (26; 26.2a; 26.2b; 26.3a; 26.3b, 26.3c) umfassen.

7. Antriebssystem (27.2a; 27.2b; 37.3a; 37.3b; 37.3c)
7.1 mit einer Antriebsmaschine zum wenigestens mittelbaren Antrieb eines Rades (28.21a, 28.22a, 28.21b; 28.22b; 28.3a; 28.3b; 28.3c) in Form einer permanent magneterregten Synchronmaschine mit transversaler Flußführung, insbesondere Transversalflußmaschine (2; 2.2a; 2.2b; 2.3a; 2.3b; 2.3c);
7.2 mit einer Feststellbremseinrichtung (1; 1.2a; 1.2b; 1.3a; 1.3b; 1.3c), **gekennzeichnet durch** das folgende Merkmal:
7.3 die Feststellbremseinrichtung (1; 1.2a; 1.2b; 1.3a; 1.3b; 1.3c) wird von der permanent magneterregten Synchronmaschine mit transversaler Flußführung, insbesondere Transversalflußmaschine (2; 2.2a; 2.2b; 2.3a; 2.3b; 2.3c) gebildet.

8. Antriebsstrang (37.3a; 37.3b; 37.3c) nach Anspruch 7, **dadurch gekennzeichnet, daß** jedem anzutreibenden Rad (28.3a; 28.3b; 28.3c) eine permanent magneterregte Synchronmaschine mit transversaler Flußführung (2.2a; 2.3b; 2.3c) zugeordnet ist.

9. Antriebssystem (37.3a; 37.3b; 37.3c) nach Anspruch 7, **dadurch gekennzeichnet, daß** der permanent magneterregten Synchronmaschine mit transversaler Flußführung (2.3a, 2.3b, 2.3c) eine Drehzahl-und/oder /Drehmomentwandlungseinrichtung (39.3a; 39.3b; 39.3c) nachgeschaltet ist.

10. Antriebssystem (27.2a, 27.2b) nach Anspruch 7, **gekennzeichnet durch** die folgenden Merkmale:
10.1 die permanent magneterregte Synchronmaschine mit transversaler Flußführung (2.2a; 2.2b) ist als Zentralmotor ausgeführt;
10.2 der Zentralmotor ist mechanisch mit einem Verteilergetriebe (32) zur Aufteilung der Leistung auf die einzelnen Räder (28.21a, 28.22a; 28.21b, 28.22b) gekoppelt.

11. Antriebssystem (27.2a; 27.2b) nach Anspruch 10, **dadurch gekennzeichnet, daß** das Verteilergetriebe (32) als Differential (34) ausgeführt ist.

12. Antriebsystem (27.2a; 27.2b) nach einem der Ansprüche 10 oder 11, **dadurch gekennzeichnet, daß** zwischen Zentralmotor und Verteilergetriebe (32) oder Verteilergetriebe (32) und Rad (28.21a, 28.22a; 28.21b, 28.22b)eine weitere Drehzahl-/Drehmomentwandlungseinrichtung zwischengeschaltet ist.

13. Antriebssystem (27.2a; 27.2b; 37.3a; 37.3b; 37.3c) nach einem der Ansprüche 7 bis 11, **dadurch gekennzeichnet, daß** die permanent magneterregte Synchronmaschine mit transversaler Flußführung (2; 2.2a; 2.2b; 2.3a; 2.3b; 2.3c) mit einem Energieerzeuger (29.2a; 29.2b; 29.3a; 29.3b; 29.3c; 29.4a; 29.4b; 29.4c; 29:4d) gekoppelt ist.

14. Antriebssystem (27.2a; 27.2b; 37.3a; 37.3b; 37.3c) nach Anspruch 13, **dadurch gekennzeichnet, daß** der Energieerzeuger (29.2a; 29.2b; 29.3a; 29.3b; 29.3c; 29.4a) eine Brennstoffzelle (41) umfaßt, die elektrisch mit der permanent magneterregten Synchronmaschine mit transversaler Flußführung (2; 2.2a; 2.2b; 2.3a; 2.3b; 2.3c) verbunden ist.

15. Antriebssystem (27.2a; 27.2b; 37.3a; 37.3b; 37.3c) nach Anspruch 13, **dadurch gekennzeichnet, daß** der Energieerzeuger (29.2a; 29.2b; 29.3a; 29.3b; 29.3c; 29.4c) ein externer Energieerzeuger (29.4c) in Form eines Oberleitungssystems (48) ausgebildet ist, welches elektrisch mit der permanent magneterregten Synchronmaschine mit transversaler Flußführung (2; 2.2a; 2.2b; 2.3a; 2.3b; 2.3c) gekoppelt ist.

16. Antriebssystem (27.2a; 27.2b; 37.3a; 37.3b; 37.3c) nach Anspruch 13, **dadurch gekennzeichnet, daß** der Energieerzeuger (29.2a; 29.2b; 29.3a; 29.3b; 29.3c; 29.4b) als dieselelektrischer Antrieb (43) ausgeführt ist, umfassend eine Verbrennungskraftmaschine (44), die mechanisch mit einer als Generator betreibbaren elektrischen Maschine (46) gekoppelt ist.

17. Verwendung eines Antriebssystems (27.2a; 27.2b; 37.3a; 37.3b; 37.3c) gemäß einem der Ansprüche 7 bis 16 in einem Landfahrzeug.

18. Verwendung eines Antriebssystems (27.2a; 27.2b; 37.3a; 37.3b; 37.3c) gemäß einem der Ansprüche 7 bis 16 in einem Schienenfahrzeug.

19. Verfahren zur Erzeugung einer Haltekraft zur Vermeidung von unbeabsichtigtem Losrollen eines Fahrzeuges im Stillstand in einem Antriebssystem (27.2a; 27.2b; 37.3a; 37.3b; 37.3c) gemäß einem der Ansprüche 7 bis 16, **dadurch gekennzeichnet, daß** das Haltemoment durch den Kurzschluß mindestens einer Ankerwicklung der permanent magneterregten Synchronmaschine (2; 2.2a; 2.2b; 2.3a; 2.3b; 2.3c) erzeugt wird.

20. Verfahren nach Anspruch 19, **dadurch gekennzeichnet, daß** eine Phase der permanent magneterregten Maschine mit transversaler Flußführung (2; 2.2a; 2.2b; 2.3a; 2.3b; 2.3c) kurzgeschlossen wird.
